# EUROPEAN PATENT APPLICATION

(11) **EP 3 223 036 A1**
(43) Date of publication of application: **27.09.2017**
(21) Application number: 17158807.2
(22) Date of filing: 02.03.2017
(51) Int. Cl.: G01S 19/17, G01S 5/00, G01S 11/06

(54) **SEARCH AND RESCUE SYSTEM**

(30) Priority: 02.03.2016 IT UB20161237
(71) Applicant: Electronic Service S.r.l., 38066 Riva del Garda (TN) (IT)
(72) Inventor: TRENTINI, Dario, 38067 Ledro (TN) (IT); KNAPP, Brunhilde, 38067 Ledro (TN) (IT); FUSARI, Emiliano, 38060 Brentonico (IT); VACCARI, Alessandro, 39100 Bolzano (IT); FRIZZI, Marco, 38123 Trento (IT); DALPEZ, Stefano, 38027 Malè (IT)
(74) Representative: De Anna, Pier Luigi

(57) **Abstract**

The present invention is aimed at a search-and-rescue (SAR) system and method for the search and rescue of persons lost in a territory. The system comprises a dynamic witness network constituted by one or more portable devices (DP), one or more location units or points (LP), one or more search units or points (SP), and one or more access units or points (AP), and by a data-collection centre (CRD); the data-collection centre (CRD) being in communication with the access units (AP) and, via the access units (AP), with the portable devices (DP) of the dynamic witness network. The portable devices (DP) interact with one another and store in a dedicated memory the information received from the other portable devices (DP) of the witness network. In particular, the memory of each portable device (DP) has a pre-set depth, and each portable device (DP) of the dynamic witness network has means for exchanging bi-uniquely the information contained in the circular buffer of the memory whenever the device links up to another portable device (DP) of the dynamic witness network, so that each portable device (DP) of the dynamic witness network stores information of other portable devices (DP) of the dynamic witness network to which it has not directly linked up. Each portable device (DP) is constituted by: a section for acquisition at a pre-set time rate of the identifier (ID) of the portable device (DP), of the acquisition time, and of spatial co-ordinates from the GPS or from a unit (LP/AP) of the network; a section for storage in the circular-buffer memory the data in time sequence with respect to the recorded data; and a section for output of the data already stored in the memory in reverse time sequence, wherein the memory of each portable device (DP) with a pre-set depth is of the circular-buffer type.

## Description

The present invention is aimed at a system for the search and location of persons in a territory, mainly in the mountains.

The present invention is aimed at solving the problems of search and rescue for persons that are missing and/or injured on land, especially in mountain contexts.

The invention is aimed at an instrument dedicated to the search and/or location of one or more persons thanks to the adoption of portable electronic devices capable of actively detecting, with the aid of a number of technologies, their own geographical position.

The technology according to the invention enables improvement and reduction of rescue times thanks to a prompt location of injured persons.

The technology according to the invention is mainly aimed at a public of occasional and non-skilled users who frequently go to mountain areas, even though its use can be extended to search-and-rescue (SAR) applications with targets in town areas for the identification of persons following catastrophes such as earthquakes, or kidnappings.

The present invention meets the above requirements with contained production costs to favour adoption and use thereof by many users, with automatic operation without intervention by the user and operation within times useful to guarantee the rescue.

There are currently available on the market some types of solution that can be used in these contexts but present operating gaps or limits of cost that prevent a widespread distribution thereof.

There are well known systems based upon GSM technology and combined GSM and GPS technology. Systems belonging to this category have proven capable of meeting the requirements of location and communication; however, they suffer from a limitation that restricts their field of application to certain applications only. They are oriented to data connection and require full functionality of the network infrastructures, both GPS and communication infrastructures, to be able to operate as well as possible.

As a result, this category of systems is not able to operate in most mountain areas as they are characterized by overgrown woods and wildernesses and impervious areas, where GSM coverage is not guaranteed and the GPS system may in some cases not be available. The main limitation, which is common to any satellite location system, concerns the availability of the service linked to "visibility" of the satellites. The GPS receiver must in fact have available the signals coming from at least four satellites to correctly determine the geographical co-ordinates of a point. This condition frequently imposes strong limitations, especially in urban areas or in mountain areas characterized by narrow valleys and dense vegetation. This is accentuated even further in the case where the user does not pay attention to the position of the receiving system. Moreover the GPS signal cannot be received in indoor environments.

Further limitations of the GPS are the accuracy of location, which is of the order of tens of metres, and by the startup times that may even require a few minutes.

Location based upon infrared radiation is a method used for determining the position of persons and objects in definite contexts and within closed spaces using various infrared emitters and receivers. Use in open areas is not recommended in any case whenever the range of coverage is very narrow, at the most of the order of tens of metres, and for channel communication to be guaranteed a positioning is required in a field of view that has no opaque obstacles in the middle.

Ultrasound location systems use mechanical waves with frequencies higher than audible levels, beyond 20kHz. The disadvantages in the application of point-to-point measurement of distances mainly arise from the circuit complexity and from the limitations of synchronization. Moreover, fading due to the environmental multipath, together with the high attenuation of the transmission medium (air), limits use thereof to very limited distances.

PLB and SPOT systems are portable devices that function all over the world and enable rescue signals to be launched thanks to satellite networks of a military or private type. They present extremely high costs for purchase and maintenance and must be used and activated by trained personnel.

The devices that use ARVA and RECCO technologies are applied to the rescue of persons buried under avalanches. In both solutions (ARVA - active device, RECCO - passive device), the rescue operations must be performed by purposely trained personnel. For this reason, they are mainly widespread among expert hikers who practise winter sports in conditions of potential risk of avalanches. Economically they constitute very different product targets (ARVA has high costs, whereas RECCO is not very costly) and they guarantee performance in terms of location suited to use in avalanches, but they present poor performance for search and rescue on land.

JYH-HOW HUANG et al. in the paper "CenWits: A Sensor-based Loosely Coupled Search and Rescue System Using Witnesses", presented at SENSYS'05; PROCEEDINGS OF THE 2nd INTERNATIONAL CONFERENCE ON EMBEDDED NETWORKED SENSOR SYSTEMS, SAN DIEGO, CA., NOV. 2-4, 2005; - pages 180-1 91, discloses a search-and-rescue method for search and rescue of persons who have gone missing in a territory, comprising a set of predefined rescue cells and mobile cells and a dynamic witness network constituted by the portable devices, corresponding to the persons to be rescued.

WO2013082407 discloses wireless communications, using one or more action devices or a host device and one or more action devices, which are wirelessly connected and define a networked system. The devices have the ability to discover other devices wirelessly as those other devices come online within the same network, automatically adjust for the additional devices, and initiate intelligent interaction between one or more connected devices.

### Summary of the invention

The aim of the present invention is to identify a technological solution that will ensure operativeness with good performance and a wide operating range, without the extensive aid of fixed infrastructures, such as communication networks (GSM) or satellite location networks (GPS), excellent operating functionality in contexts of emergency and compatibility with currently used practices of rescue, low production and maintenance costs that are compatible with a widespread use especially among occasional users, and simplicity of use also by non-trained personnel or by persons who are in conditions of unconsciousness. None of these characteristics can be found in the prior art.

The above problem is solved with the aid of a system and method described in the attached independent and dependent claims.

The present invention provides a search-and-rescue (SAR) system for the search and rescue of persons lost in a territory, which comprises a dynamic witness network constituted by one or more portable devices (DP), one or more location units or points (LP), one or more search units or points (SP), and one or more access units or points (AP), and by a data-collection centre (CRD); the data-collection centre (CRD) is in communication with the access units (AP) and, via the access units (AP), with the portable devices (DP) of the dynamic witness network. The portable devices (DP) interact with one another and store in a dedicated memory the information received from the other portable devices (DP) of the witness network. In particular, the memory of each portable device (DP) has a pre-set depth; and each portable device (DP) of the dynamic witness network has means for exchanging bi-uniquely the information contained in the circular buffer of the memory whenever the device links up to another portable device (DP) of the dynamic witness network, so that each portable device (DP) of the dynamic witness network stores information of other portable devices (DP) of the dynamic witness network to which it has not directly linked up. Each portable device (DP) is constituted by: a section for acquisition at a pre-set time rate of the identifier (ID) of the portable device (DP), of the acquisition time, and of spatial co-ordinates from the GPS or from a unit (LP/AP) of the network; a section for storage in the circular-buffer memory the data in time sequence with respect to the recorded data; and a section for output of the data already stored in the memory in reverse time sequence, wherein the memory of each portable device (DP) with a pre-set depth is of the circular-buffer type.

The invention is further aimed at a search-and-rescue (SAR) method for search and rescue of persons who have gone missing in a territory using the system according to the claims. The method envisages definition of a set of predefined rescue cells (AP) and mobile cells (SP) and a dynamic witness network constituted by the portable devices (DP), corresponding to the persons to be rescued, as well as by a data-collection centre (CRD). The method comprises: acquisition by each portable device (DP), at constant intervals, of its own geographical position via the GPS or via a data-emitting device constituted by a location unit (LP); biunique and mutual storage, during link-up between two distinct portable devices (DPx) and (DPy), of their new geographical positions, in the respective first locations of the circular-buffer memories with pre-set depth present in each portable device (DPx) and (DPy); direct acquisition, by one of the mobile rescue units (SP) or fixed rescue units (AP), of the most recent geographical positions of a portable device (DP) by means of direct link-up of the portable device (DP); indirect acquisition using the witness method, by one of the mobile rescue units (SP) or fixed rescue units (AP), of the most recent geographical positions of a portable device (DPx), by means of direct link-up or link-up with a different portable device (DPy), which has previously stored the recent geographical positions of the portable device (DPx), the portable devices (DPx) and (DPy) being present in the dynamic witness network; association to each information datum regarding a geographical position also of the respective information on the identifier datum (ID) and on the acquisition time; shifting by one location of the information present in the circular-buffer memory and, after classification and filtering, rejection of the information present in the memory that is least significant for the purposes of search for lost persons; forwarding to the data-collection centre (CRD) of the information received from the buffer memories of the portable devices (DP); and reprocessing, by the data-collection centre (CRD), of the data of the dynamic witness network, gathered by the access units (AP) and search units (SP) and sent by them to the data-collection centre (CRD), with display on an interactive map of the geographical positions of the portable devices (DP) and temporal reconstruction of the path followed by the portable devices (DP) for estimation of the possible position of the lost person for search-and-rescue (SAR) purposes.

Preferred embodiments of the system and method according to the invention are specified in the dependent claims.

### FIGURES

Figure 1 - Architecture of the experimental platform TourisTrack
Figure 2 - Architecture and hardware components of the node Location Point LP
Figure 3 - Architecture and hardware components of the node Search Point SP
Figure 4 - Architecture and hardware components of the node Access Point AP

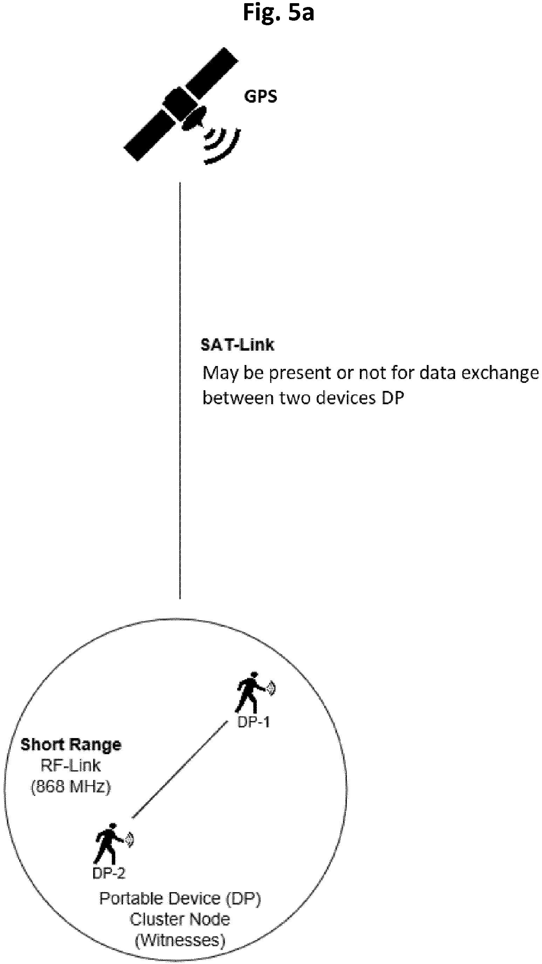

Figure 5a - Encounter between portable devices DP1 and DP2

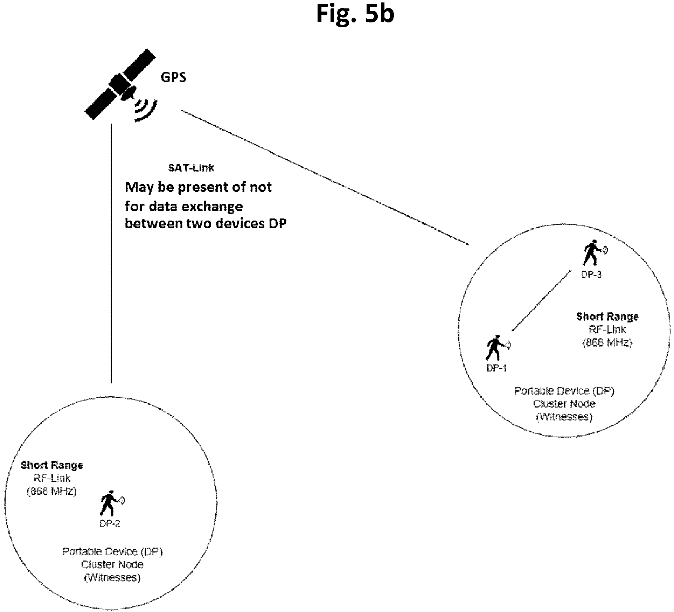

Figure 5b - Encounter between portable devices DP1 and DP3

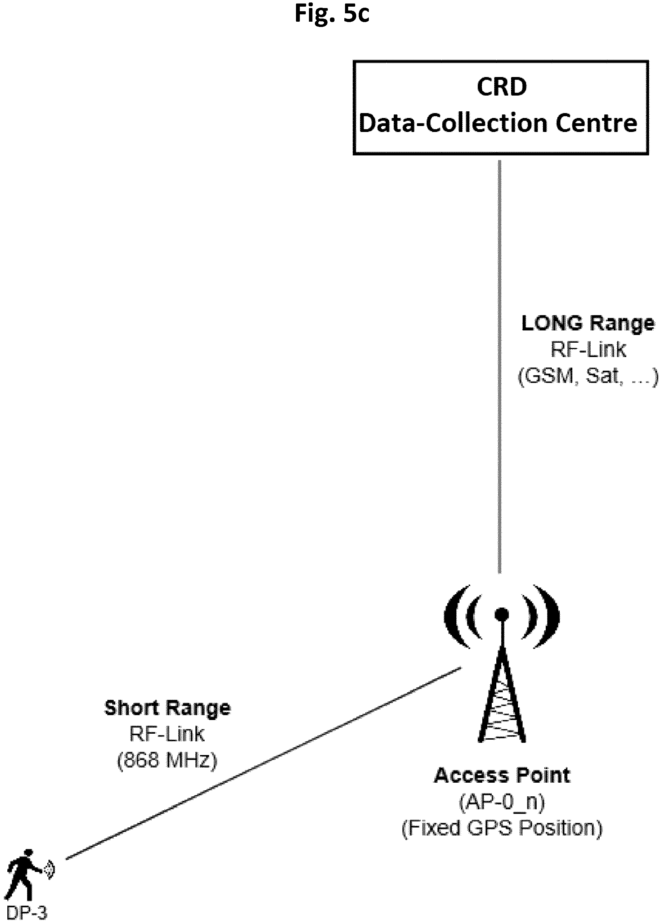

Figure 5c - Encounter between portable device DP3 and access point AP
Figure 6 - Flowchart of the access points AP
Figure 7 - Flowchart of the location points LP
Figure 8 - Flowchart of the search points SP
Figure 9 - Flowchart of a portable device DP

### Embodiments

By "location" is meant the detection at intervals of the geographical co-ordinates. In SAR operations, it is of fundamental importance to have certain knowledge at least of the last known position of the person who has gone missing, to be able to restrict the area of search in a timely way and perform the operations of search and rescue efficiently. This enables probabilistic determination of the paths and positions of the users from an analysis of the set of the data acquired by the other users present in the witness network TourisTrack.

The system avails itself, for sending and receiving rescue messages containing various parameters useful for the search, of radio transceiver means via a radiofrequency channel to enable sending of rescue messages and emergency communications according to an appropriate protocol and possibly also thanks to the aid of point-to-point communications between a number of devices. Envisaged in the communication protocol, according to the application, is the possibility of entering information regarding the state of motion of the user, by means of an accelerometer and a magnetometer.

The system avails itself of an on-board CPU with dedicated firmware capable of meeting the operating requirements autonomously so as to function in any operating scenario, possibly accepting, in the absence of fixed networks, a modification of the functional performance of the device.

The coverage of many terrestrial communication networks, such as for example GSM, proves somewhat inadequate in mountains environments but may in any case provide a valid supporting channel, in particular for a hiker who remains within the area of coverage.

Portable mobile devices form, together, a short-range witness network, with the possibility, through the access points or the addition of Bluetooth for communication with the cellphone of the user, of establishing a bridge with a long-range GSM-GPRS network.

The system also operates in the absence of fixed communication or location networks, where the GSM and GPS signals are not available. It hence envisages integration of appropriate technology for implementation of a supplementary communication channel that will be able to send a repetitive radio signal (beacon). This characteristic proves of fundamental importance for location by the personnel trained for rescue operations who are present within the range of the device.

The system avails itself of a witness network, i.e., of a carrier of location information of its own and of other mobile devices that it encounters during displacement of the user.

This means that the device can acquire location information of other mobile points even in the absence of GPS and GSM networks, hence guaranteeing an extension of the coverage of the platform even in extreme situations, this being a condition that commercially available devices are unable to offer.

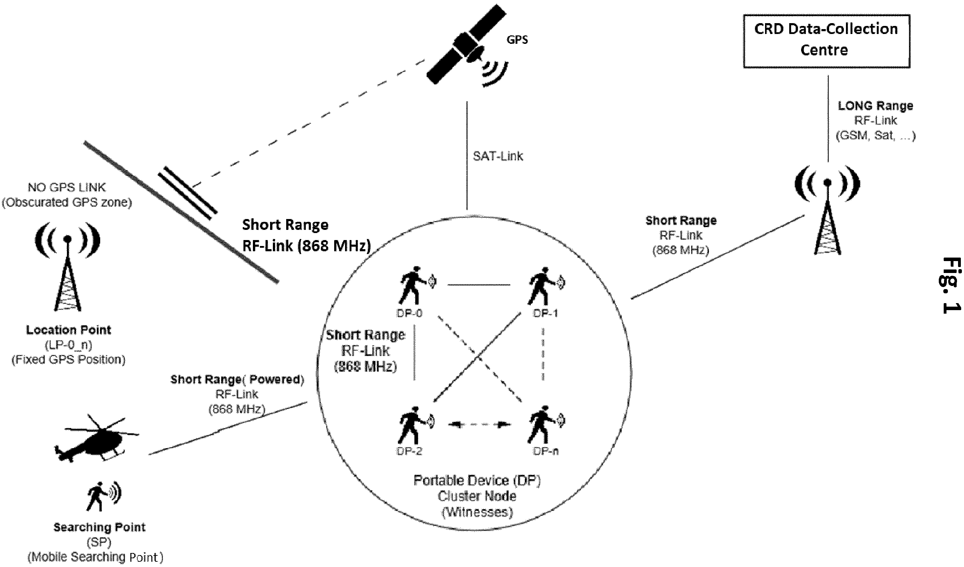

The control/monitoring system according to the invention falls within the applications referred to as SAR (Search-And-Rescue), devised to provide traceability and location of human subjects for emergency purposes within a given territorial area in the region of some square kilometres that may vary also according to the number of subjects). The general architecture is represented in Figure 1. The architecture identified is based upon pre-existing platforms developed for the same purpose. The human subjects that move within this area may be identified as hikers. Tracing/location is not on a point basis, but envisages a sub-area (of considerably reduced dimensions) in which a hiker who has been declared missing is located and which must be combed by the personnel responsible for rescue operations, once the search alarm has effectively been issued.

A thorough search is made within the sub-area via radio-location. The system is made up of four interacting physical elements, namely:
- portable devices DP, which represent the most specific and determining elements of the entire platform;
- location points LP;
- search points SP; and
- access points AP.

The latter three elements represent, instead, the infrastructural elements, i.e., the nodes that are predistributed over the territory for supporting the functions of management of the network or that form part of the rescue system once the search alarm has been issued. All these physical elements are described in what follows in their general functions, leaving to subsequent sections the description of the corresponding hardware specifications.

A necessary condition for existence of the system is the GPS (Global Positioning System) coverage of the aforesaid area of territory, except where the location points are envisaged in areas that are not covered by the GPS. An integral part of the platform is the software/firmware that manages interaction between the elements.

The system envisages a data-collection centre CRD, which gathers and processes all the low-level information that flows in the system constituted by the aforesaid physical elements, deriving therefrom information for tracing and locating subjects/hikers.

The data-collection centre CRD is in communication only with the access points (AP) of the platform via a long-range RF link, which may be of a GSM, satellite, Wi-Fi type, or some other wide-coverage stable technology.

### Portable device DP

This is the physical device or node on which the entire platform is based. It is mobile and is assigned (bi)uniquely to each hiker, who wears it as a gadget. The biuniqueness is implemented by means of an exclusive identification number ID (positive integer).

The portable device represents a node of the dynamic network that is set up within the territory monitored, together with all the other devices DP activated thereon. Moreover, it performs the function of witness in so far as it can keep track of possible encounters with other portable devices by way of its record table. It has a rechargeable battery supply, which is characterized by a limited autonomy. Consequently, minimization of consumption represents a target to be pursued.

The portable device basically consists of the three sections below:
1) a GPS section, which acquires the co-ordinates from the satellite or, if necessary, from a device LP/AP, and the corresponding time, with which to synchronize also the clock of the portable device DP; the acquisitions are made at a pre-set rate; the co-ordinates acquired are maintained, up to a new acquisition with overwriting, in a purposely provided memory area, within a register referred to as "DP-PRESENT RECORD"; in another field of this register there is also stored the time of acquisition of the co-ordinates; the time interval between two successive acquisitions may vary dynamically;
2) a TX/RX section, which is dedicated to communication with the devices AP, LP, SP and the other portable devices DP by way of a short-range channel at a pre-set frequency; and
3) a sensor section equipped with an accelerometer and a magnetometer.

The communication is regulated via "beacons" mutually exchanged with the devices with which the portable device enters each time into communication. This connection step is followed by an exchange of further sensitive data between devices connected together, which each time are just two (any possible further attempts at connection with other devices are inhibited).

When a pair of devices are connected together, an encounter is said to occur. In particular, when two devices DP encounter one another, each stores preliminarily in a purposely provided area of its register DP-PRESENT RECORD the identifier ID of the other device, and in another purposely provided area of the register DP-PRESENT RECORD the local time (at the device DP) of the encounter. Moreover, also a transfer counter is reset, in the case of a data transfer of a device DP to a device AP or upon routing and assignment/delivery of a device DP to a subject to be entered in the witness network.

The contents of the register DP-PRESENT RECORD remains up to a new encounter, but for possible overwriting, in the meantime, with new acquired GPS co-ordinates and corresponding local time. When a new encounter occurs, the contents of the register DP-PRESENT RECORD are transferred into a circular buffer (FIFO record table), and new contents are produced in the register DP-PRESENT RECORD, regarding the new device DP connected and the time of the connection.

The circular buffer has a pre-set depth and cannot receive an unlimited number of records. Hence, at a certain point, the first records that have been entered will exit to make room for the new arrivals, and the information contained therein will be lost. As mentioned above, the link-up step is preliminary to a further exchange of sensitive data. If the circular buffer contains records of previous encounters, they must be mutually exchanged between the two devices DP connected. The exchange is made by copying the data and subsequent transmission.

This means that a portable device DP does not normally lose the data that it transmits. Its circular buffer must, however, have enough free space to be able to receive the data of the circular buffer of the portable device DP to which it is connected. It could hence also happen that, in the absence of space, some records, the contents of which have previously been recorded must then be erased.

It is important to bear in mind also that, at each exchange of the records of the circular buffer of the portable device DP, the corresponding transfer counters are incremented by one unit.

If a portable device DP encounters an access point AP, it will download all the contents of its own circular buffer onto the access point AP itself, which in turn will route them to the data-collection centre CRD for subsequent high-level processing and reconstruction. With this operation, the portable device can dispose of the information so far gathered, because it is by now filed in a safe place and can consequently erase its own circular buffer so that the latter is ready to witness new encounters. If, however, the portable device DP does not encounter devices AP, the persistence in its circular buffer of the records that it progressively accumulates guarantees that the corresponding information is not lost and can be possibly recovered via queries by search-point devices SP at the moment of a possible effective search.

These are the basic operations that the portable device DP carries out when it links up to another portable device DP. Simplifying variations exist in the case of link with the other devices of the platform, namely AP, LP, and SP.

An important issue regarding the use and operation of the devices DP is the one regarding optimization of the memory since, apart from RAM availability on board the device, the longer the buffer, the greater the potential amount of information to be exchanged at each generic encounter of the devices DP. For this exchange of information to be reliable, it is necessary to guarantee a given transmission bitrate, for given speeds of displacement of the portable devices DP (which correspond to the speed of displacement of the hikers who wear them) and range of their transmitters. The optimization criteria that may be identified and implemented by the system according to the invention are the following:
- maximum number of records that can be stored in the circular buffer;
- circular buffer with a number of records with the same identifier ID; in this case, the system decides to erase records in excess with respect to a pre-set limit and to maintain only the records with the most recent time; since a single hiker is associated to a given identifier ID, this criterion tends to exclude redundant information that may regard him and is implemented by the functions of filtering and sorting of the records that intervene after exchange of the respective record tables of the portable devices DP;
- minimum anti-redundancy time for reconnection and mutual transfer of the encounter tables between two devices DP; this anti-redundancy time prevents two nodes DP from possibly continuously reconnecting up and transferring the respective encounter tables in the case where said nodes DP were to be stably within their communication range; assuming that the hiker is travelling at 1.5 m/s and considering a minimum anti-redundancy time of 120s (2 min), two devices DP that move away from one another would cover an overall space of 360 m; it is thus reasonable, at this distance, to enable a further link-up and recording of the encounter; moreover, this waiting interval before enabling the further link-up between the two given nodes DP is useful for implementation of the anti-collision algorithms (see OR4[6]) so as to allow a group of hikers that were to encounter one another in the same communication range to exchange their encounter tables in the shortest time possible; this enables the dynamic network to be established and completed, with all the transfers made between all the portable devices DP present in the same communication range, within a reasonable time;
- count of the transfers of a given record in a given device DP; the system decides whether, once a pre-set limit of this count has been overstepped, to erase the record from the circular buffer in so far as it has been transferred many times and hence it is present on a number of devices DP; consequently, the likelihood of at least one of the various devices DP forwarding the corresponding information to a device AP is high; in other words, a copy of the corresponding information is guaranteed to be present on a number of nodes of the dynamic network;
- anti-collision algorithms in the management of the communications between a number of nodes and in particular between a number of portable devices DP, considering that the type of network does not envisage nodes with co-ordinator function.

The type of memory adopted, i.e., a circular buffer with a pre-set depth that, however, can be set according to the application setup envisaged, enables storage of an appropriate number of previous encounters between devices DP, in the present case ten records. These data records, following upon filtering, anti-redundancy, and classification, are the most updated data of geographical co-ordinates and time of the portable devices DP encountered directly and/or indirectly. This number of records (ten) has been estimated as being suitable for reconstructing the paths of the portable device DP of the hikers who may have gone missing for the purposes of an application of a SAR type. Moreover, the data depth of ten records of the circular buffer enables limitation of the memory size and affords a good rate of processing (filtering, anti-redundancy, and classification). There is thus obtained the optimal timing of data exchange between two devices DP, for a given total number of devices DP, in order to obtain a complete setup of the network in the shortest total time possible (i.e., when all the portable devices DP present in the same communication range have exchanged with each other the contents of the respective circular memory buffers).

Also, a minimization of depth of the circular buffer, requiring a shorter processing time, leads to a lower energy consumption and hence a longer autonomy of the portable devices DP, considering that the components constituting the hardware are set in the sleep or power-down states during processing and communication inactivity. The system envisages an algorithm for checking the level of the battery of the portable device DP so that, below a critical threshold, the aforesaid device DP is sent into a state of permanent inactivity up to a new recharging of the battery.

### Location point LP

This is a fixed and self-supplied device, for example supplied with a small photovoltaic panel and rechargeable battery, hence without problems of battery life. It makes up for the GPS function supplying the co-ordinates of the point in which it is positioned, there being already contemplated the absence of a satellite coverage by the GPS proper. This may happen in the presence of gorges or of wooded areas with vegetation that is so dense and luxuriant as to be impenetrable to radio signals arriving from above. The location points LP operate only in transmission TX.

The device LP represents the fixed node with function of transmission of the position co-ordinates (GPS co-ordinates) and is strategically located on the territory in points where satellite signals are obscured. In this way, the mobile nodes or portable devices DP that, in the neighbourhood of the location point, are unable to acquire the position from the GPS, may instead acquire it from the location points LP themselves.

The only function envisaged for the location point is to transmit, at regular intervals, for example every 30 s, an LP-beacon followed by a data packet containing the GPS co-ordinates, which will be fixed and previously stored in the device LP at the moment of installation thereof. Mobile portable devices DP that enter within the communication range of the location point will thus be able to acquire the GPS position even in an area where satellite signals are obscured.

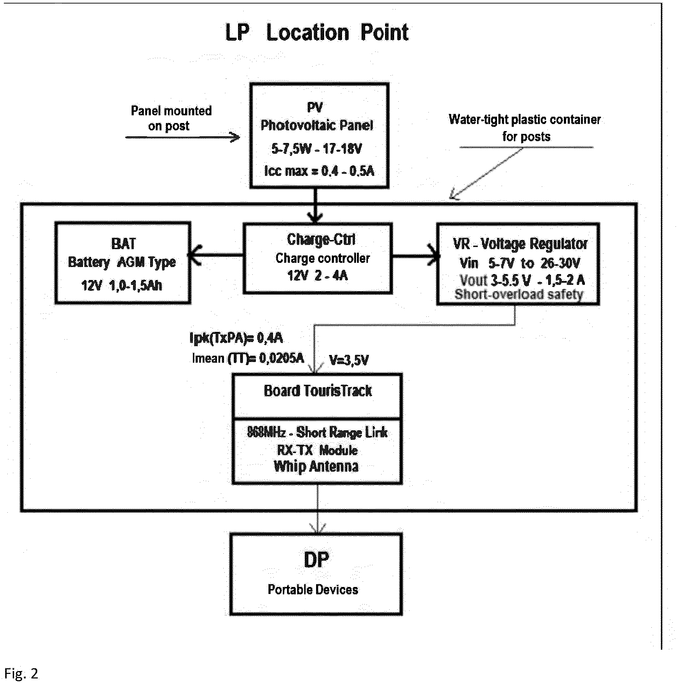

Represented in Figure 2 is the architecture of the location point LP, and listed hereinafter are the hardware components constituting the location point LP.

All the components listed, except for the photovoltaic panel, must be inserted in a water-tight container for outdoor use made of plastic material with adequate IP degree. The container and the photovoltaic panel PV will then be mounted with suitable brackets on a post or similar support. The photovoltaic panel PV must be positioned in optimal vertical and horizontal orientations to obtain the maximum exposure to solar radiation, especially in winter.

Also, the area of the territory where the post with the location point is positioned must be chosen with the smallest number of obstacles possible to favour the communications with the portable devices DP and in areas where satellite signals are obscured.

The location point is only equipped with the board according to the invention modified in LP configuration, in which the GPS, accelerometer, magnetometer, and components for management of supplies are not installed, but only the components regarding the sections µP, RF, RF-PA and a whip antenna must be used.

For instance, the location point LP transmits one LP-beacon (15 bytes in 0.0125 ms) and one data packet (29 bytes in 0.0366 ms with the position co-ordinates) every 30s at a transmission rate of 9600 bps. The total time of said transmission Ttx is 0.0491 s, i.e., 49.1 ms. It follows that the location point is, in this example, in transmission for 5.892 s (0.0491 s x 120 tx) each hour (3600 s).

The battery and the photovoltaic panel must hence be appropriately sized, considering that there is consumption only in transmission and for the rest of the time the device does not perform any communication activity in so far as there are not envisaged functions of reception RX and hence the current absorbed by the device is just the current absorbed by the functions of the microprocessor and of the basic circuits of the board.

### Search point SP

This is a mobile device constituting a fixed-frequency short-range search station installed on the rescue units, for example a helicopter, or as hand-held device for search on the ground or the like, for the final fine combing for search for a missing hiker. The devices SP are consequently used in the rescue emergency stage. They emit an SP-beacon of their own for radio-location of the portable devices DP. A portable device DP that captures an SP-beacon issues in response only its own DP-beacon at the maximum transmission power afforded by its energy reserves so as to maximize the likelihood of the beacon being captured by the station SP that is searching for it. The portable device DP, after replying with its own DP-beacon, ceases all its other activities and, as long as it receives the SP-beacons, emits its own DP-beacon repeatedly, this datum being located in a fine way within a sub-area on the basis of the intensity of its signal.

The search-point device SP represents not only a fixed node, in the case where it is installed as station for searching for missing persons on rescue means such as helicopters, search vehicles, etc., but also a portable mobile node that SAR operators can use on the ground in explorations circumscribed to specific areas of the territory. In this way, the mobile nodes or portable devices DP that are within the communication range of the search points SP can receive the corresponding SP-beacons and respond with the respective confirm DP-beacon, thus enabling the search points themselves to identify the portable devices DP. Moreover, the search points can detect the intensity of the radio signal emitted by the portable devices DP by measuring the RSSI level, thus enabling evaluation of the greater or smaller distance from the missing person.

In use, the portable devices DP, upon detection of an SP-beacon, have to interrupt all the activities in progress (the nodes SP have maximum priority) and respond with one or more confirm DP-beacons, activating, if necessary, also emission at high power via activation of the power amplifier PA on the radio signal to enable a greater detectability. The functions envisaged for the search point are transmission, at regular intervals (with or without activation of the power amplifier PA for both), of the SP-beacons and subsequent reception of possible confirm DP-beacons transmitted by the portable devices DP within their communication range.

The time intervals envisaged for transmission of the SP-beacons are within a range between a minimum of 5 s and a maximum of 15 s, with variability according to whether a portable device DP has been detected or not, i.e., increasing the emission frequency when a confirm DP-beacon is received. Moreover, in this step, also the intensity (RSSI) of the signal emitted by the portable device DP itself is detected for evaluation of the distance.

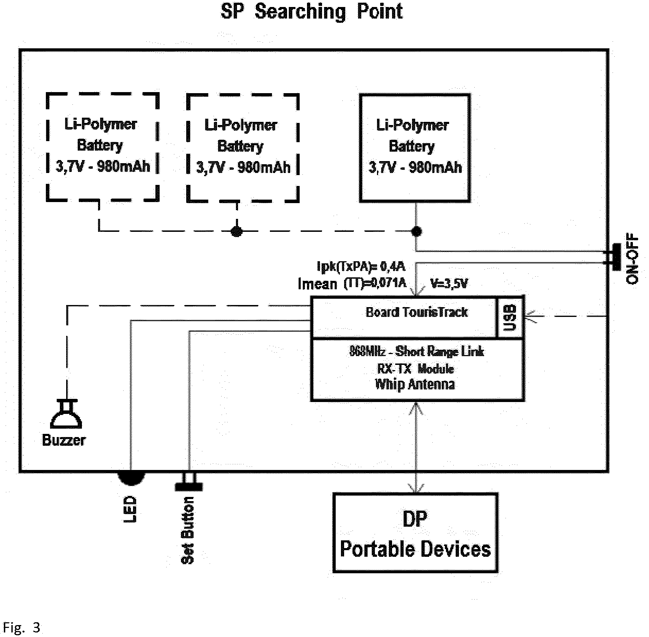

Represented in Figure 3 is the architecture of the search point SP, and listed hereinafter are the hardware components constituting the search point SP itself.

The search point is constituted by: a board configured as search point, for transmission of the search SP-beacons to the mobile nodes DP (worn by the persons present in the neighbourhoods); a whip antenna connected to the SP board; one or more 980-mAh batteries in parallel of the Li-polymer type, such as the ones used on board the portable devices DP according to the desired autonomy; and a container or containers suited both for use of the search point SP in fixed stations (helicopters, rescue vehicles, etc.) or for portable use for SAR operators on the ground in the territory to be monitored.

The components listed, which constitute the search point, are enclosed in a container of a type suitable for use of such a device, which may be in a fixed position or else may be mobile and portable for use by operators on the ground. Said container moreover enables exit of the whip antenna and envisages the presence of a possible LED for providing a light warning in the event of detection of a portable device, an ON/OFF switch, and adequate connectivity for recharging via the USB port.

The search point uses only the board modified in SP configuration, in which the GPS, the accelerometer, and the magnetometer are not installed.

The search point SP, in its functions, transmits an SP-beacon, at regular intervals from a minimum of 5 s up to a maximum of 15 s. The duration of these intervals, when a portable device DP is being detected, must be modulatable and progressively shorter the smaller the distance between the search point SP and the device DP, which is evaluated by measuring the RSSI parameter of the radio signal transmitted by the device DP. Next, for a duration in any case not longer than the duration determined previously as a function of the distance between the search point SP and the device DP, the search point remains in reception for detecting the confirm DP-beacons transmitted by possible portable devices DP.

The search point SP can be supplied with external source via the USB port and hence without any limitation of autonomy and with the possibility of detection directly on a PC. This supply and connection mode of the search point SP is used both in association with dedicated rescue means, such as technologically equipped motor vehicles that explore the search area or else rescue helicopters/drones that can carry out a low-flying search. Alternatively, the search point can be supplied autonomously, via a battery or batteries, for a land exploration of the search area by expert SAR operators. In this case, the battery autonomy is of a minimum of 24 h with continuous operation, before recharging becomes necessary, in so far as, reasonably, it is assumed that an operator on the ground can perform his own function of search for missing persons in an open territory for at least an entire day.

To obtain the above battery autonomy, it is necessary to evaluate the consumption levels determining the maximum current Imax(SP) and mean current Imean(SP) absorbed by the search point SP, and the average consumption over 24 h, in the operating conditions in transmission of the SP-beacons, with the power amplifier PA activated, at an average transmission rate of 10 s (to which there correspond 360 detections per hour) and continuously over 24 h. For the remaining time, after the device has issued its SP-beacon, it is envisaged that it will remain in reception for 5 s so as to enable detection of possible DP-beacons.

Considering a communication rate of 9600 bps, transmission of an SP-beacon, made up of 15 bytes (120 bits), will have the duration of 0.0125 s (12.5 ms); hence, the search point will be, over the 24h assumed for battery autonomy and on average every 10 s, in transmission for 0.0125 s and in reception for a further 5 s.

The current absorbed in transmission by the search point is estimated to be in the region of 70 mA, whereas the average current estimated for the search point both in transmission and in reception is 35.5 mA. For an autonomy of the battery of the search point of 24 hours without recharging and a depth of discharge of the battery of at most 30% of the nominal capacity between one recharge and the next, the nominal capacity necessary for the 3.5-3.7 V battery is 2.84 Ah. Potentially, the search-point device SP does not have limitations of autonomy in so far as an unlimited supply is possible via an external source and, in the case of battery supply, it is possible to increase the battery capacity to obtain the desired autonomy.

### Access point (AP)

This is a fixed and self-supplied device. The access points AP do not communicate with one another, and hence do not form a computer network. They must, however, be able to communicate in a safe way (for example, via the GSM mobile-phone standard) with the data-collection centre CRD, forwarding thereto the information that they gather from the various portable devices DP when the latter enter within their own range.

The access-point device AP represents the fixed node with function of collecting the data regarding the encounters between the mobile nodes or portable devices DP and of transmitting, at thirty-minute intervals, said data to a dedicated remote server.

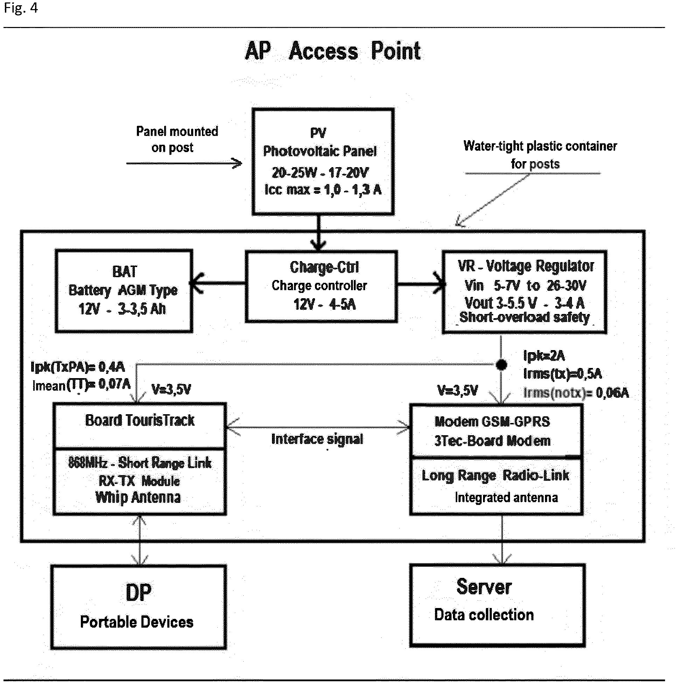

The access points AP may be located in appropriate points distributed over the territory, i.e., in typical points of passage from which, on the basis of the analysis of the data acquired from the portable devices DP, reconstruction of the paths followed by the persons to be monitored could be facilitated. The access point is constituted by the hardware components represented in the architecture of Figure 4.

Tests conducted in field have enabled validation of the operating principle of the platform, in particular via testing of coverage in transmission and reception TX/RX between the portable device DP and the access point AP, with verification of setting-up of the short-range network through exchange of the beacons between portable devices DP and consequent storage of the mutual encounters even in the absence of connection to fixed devices such as access points AP and location points LP, and with verification of reception of the data between the portable devices DP and the access points AP with downloading of all the information regarding the encounters that a specific portable device DP has had, which are stored in its circular buffer, and finally sending of the data by the access point AP to the data-collection centre CRD for subsequent mapping of the data. The range of coverage between a portable device DP and an access point AP is reliable for distances of 100 m.

The portable devices DP do not communicate continuously with each other as in a normal computer network, but convey the information via the so-called encounter witness. By recording and updating the information strictly necessary for geographical location, and conveying it at a distance by means of mutual interaction when there are encounters between physical devices (obviously, within the range of the transmitters), it is possible to reconstruct an overall picture, even if not altogether precise, of the distribution of the hikers over a given area of the territory, given that each portable device DP is a witness of the other portable devices DP that it has possibly encountered along its way.

In the portable devices DP there is a time interval dedicated to GPS acquisition (maximum GPS time), followed by a radio interval (radio time) dedicated to the transmission/reception of the beacons of other devices. In the transmission sub-intervals TX, the portable device DP emits its beacon and for the entire duration of the reception sub-interval RX (interval for sending the beacon) it awaits reception of a beacon of some other portable device DP. If it receives this beacon, the two devices are linked up and, after each one has created its own record DP-PRESENT RECORD "pushing" the pre-existing record into its own circular buffer, can start exchange of the previous records, regarding encounters that each of the two portable devices DP had made previously.

The system according to the invention constitutes a short-range network of the witness type, based upon verification of exchange of data between devices DP within the short-range area. From exchange of the data between mobile devices it is possible to deduce and reconstruct indirectly the position of a given device DP, through the analysis of the data recorded by another device DP, even if the device DP in question has not had an encounter with the other device DP.

Once an encounter has taken place between the mobile devices DP1 and DP2, they exchange the data stored in them. In particular, the node DP1 acquires the data regarding the event (date/time/GPS co-ordinates) of encounter with the node DP2.

When the node DP1 intercepts the node DP3 after it has gone out of the range of coverage with the node DP2, the two devices DP1 and DP3 enter the interconnection area and re-establish between them a short-range network (witness network). As in the previous case, the device DP1 exchanges its own data with the device DP3, and the device DP3 acquires both the data on the encounter with the device DP1 (i.e., time/date/GPS co-ordinates) and the data carried by the device DP1, and also the data on its previous encounter with the mobile device DP2.

When the device DP3 exits from the range of coverage with the device DP1 and subsequently intercepts an access point AP, it will establish a data connection therewith and will transfer on the device AP all the information that it has acquired in the course of its movements over the territory. The device DP3 will transfer the data regarding the encounters stored to the device AP and then the latter will transfer them to the data-collection centre; these data contain also the information regarding the mobile device DP2 that the node DP3 in effect has never encountered directly. The information is acquired by the system, thus guaranteeing the possibility of knowing the position of the device DP2 for possible rescue actions.

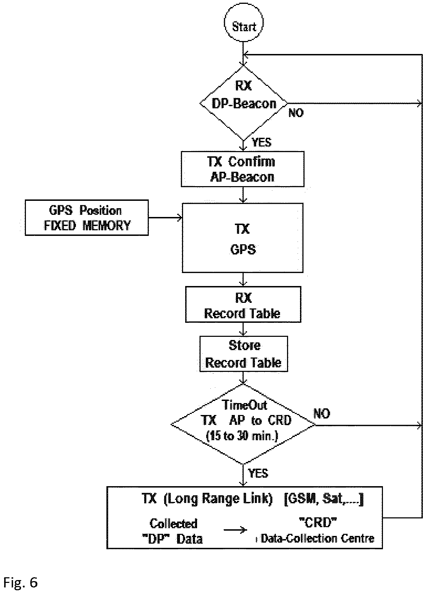

Figure 6 illustrates the flowchart of operation of the access points AP. The access points AP do not communicate with one another but represent the bridge between the short-range dynamic witness network proper, formed by the portable devices DP, and the global long-range network constituted by the connection of a GSM-GPRS, satellite, or similar type, with the data-collection centre CRD. The access point AP gathers the encounter tables containing the co-ordinates and the time recorded by the portable devices DP that are within its communication range. These co-ordinates and associated times are contained in the circular-buffer memory of each of the portable devices DP. The access point AP transmits these data to the data-collection centre (CRD) at regular intervals with presettable duration (in the validation stage this duration has been tested in the range from 15 min to 30 min). In the access-point unit AP a real-time clock proper is not implemented; hence the access point detects and reports exclusively the time contained in the encounter tables received from the portable devices DP. The access point AP executes at regular intervals the aforesaid accesses to the data-collection centre CRD, even if not there are no new data detected by the portable devices DP themselves. With these accesses, it thus informs the data-collection centre CRD that it is in the regular operating state. Stored permanently in the access point AP are the GPS co-ordinates of its geographical location, which are transmitted to the portable devices DP and used by the data-collection centre CRD during initial setup of the network or for functions of diagnostics of the network itself.

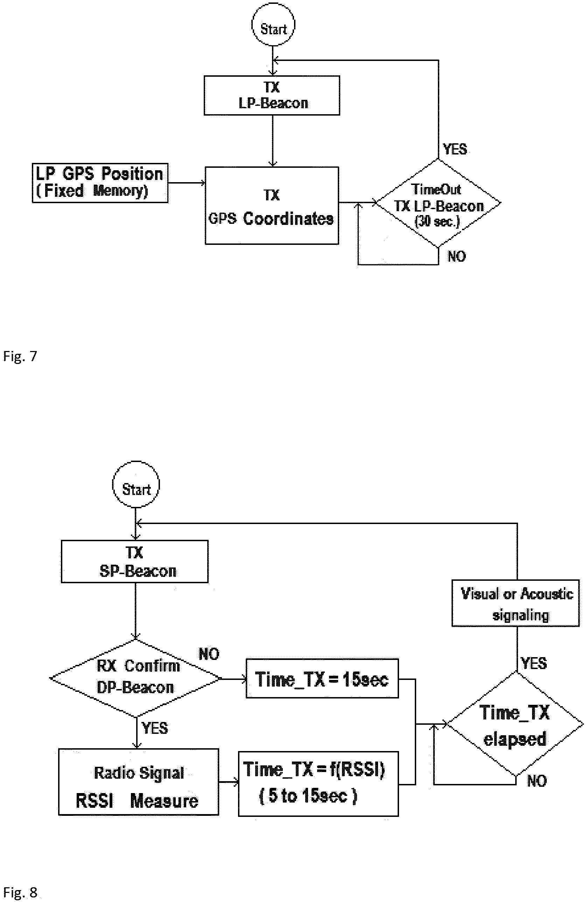

Figure 7 illustrates the flowchart of operation of the location points LP. Stored permanently in the device the co-ordinates of its geographical location. The device, at regular pre-settable time intervals of 30 s transmits its identifier beacon (LP-beacon) and, along with it, said geographical co-ordinates. This process is iterated continuously in time. All the portable devices DP that are found within the communication range of the device LP receive and store said co-ordinates, associating thereto the most recent GPS temporal information already acquired from the portable devices DP themselves.

Figure 8 illustrates the flowchart of operation of the search points SP. The device transmits at regular intervals its identifier beacon (SP-beacon) and in the remaining part of the time interval remains in reception mode to detect beacons transmitted by possible devices DP (DP-beacon) present within its communication range. Said DP-beacons represent signals of confirmation that there exist a connection between the devices SP and DP. Moreover, the device SP detects the RSSI level (intensity of the radiofrequency signal) of the portable device DP using it to vary the duration of the time interval between two successive emissions of its SP-beacons.
The range of variation of the duration of said interval, as a function of said RSSI, is from 5 s to 15 s, and the higher the level of RSSI detected, the higher the frequency of emission of the SP-beacons. This functionality, associated to acoustic and/or visual signals, enables evaluation of the distance between the device SP (SAR operator) and the device DP (person being sought), and hence a greater accuracy and speed of location.

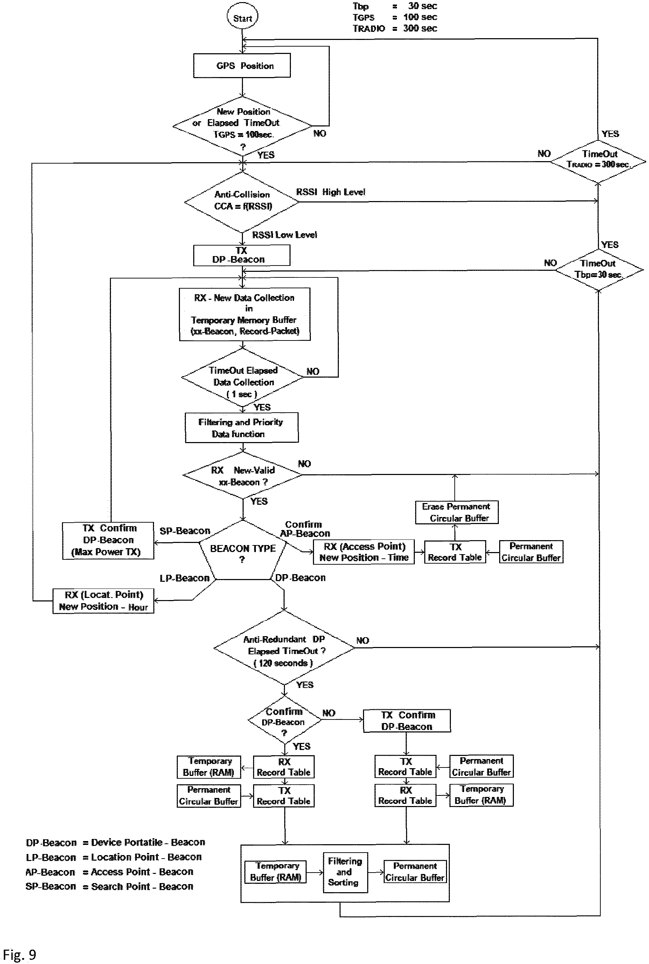

Figure 9 illustrates the flowchart of the operating cycle of the portable device DP. Operation of a portable device DP starts with an initial step, the GPS step, of acquisition of the geographical co-ordinates and time from the GPS, this step having a maximum duration TGPS of 100 s. In the case of a successful acquisition with storage of updated co-ordinates and time, or in the case of timeout (longer than 100 s), the device immediately enters the next step, i.e., the radio step, having a maximum duration TRADIO of 300 s, during which the portable device DP prepares itself for communication with all the nodes constituting the dynamic witness network (AP, SP, LP, and other devices DP).
The radio step envisages transmission by the device DP of its own DP-beacon at regular intervals, that are however pre-settable, having a duration Tbp of 30 s, to notify its own presence to the other possible network devices within its communication range. To prevent simultaneity in transmission of the response of two or more nodes, a time, of pseudo-random duration, has been implemented to be added to the times TGPS, TRADIO, and Tbp.
The anti-collision function in the communication between more than two nodes, referred to as "CCA-MODE" where CCA stands for "Clear-Channel Assessment", envisages sending of the DP-beacon only when the signal intensity RSSI detected by the portable device DP is lower than a given threshold, thus indicating that in the communication range of the portable device DP there do not appear to be active communications by possible other network devices. After positive outcome of said anti-collision check, the portable device DP sends its own DP-beacon and sets itself in reception mode for a time of 1 s, during which it stores in a temporary memory buffer all the data detected, which may be xx-beacons (where xx stands for SP, AP, LP, and DP) or else data records/packets regarding the encounters with other devices DP. At the end of said time interval of 1 s, the data contained in the temporary memory buffer are analysed to eliminate preliminarily any possible corrupt data or data not addressed to the portable device DP itself (but regarding communication between other devices DP), and subsequently to identify the network device to be served according to the predefined priorities listed below.

| *Packet type* | *Priority level* |
|---|---|
| Beacon received from search point | 5 |
| Confirm beacon received from portable device | 4 |
| Confirm beacon received from access point | 3 |
| Beacon received from portable device | 2 |
| Beacon received from location point | 1 |
| Data packet | 0 |

In the case where the temporary buffer contains two or more xx-beacons or data records/packets with the same priority level, the node DP will answer the latest one received.

According to the device to be served identified, said device DP undertakes the actions described below.
- For a device SP, it sends its confirm DP-beacon at the possible maximum power of the radio signal, subsequently returning to the reception step.
- For a device LP, it acquires and stores the GPS co-ordinates supplied by the device LP itself associating thereto the most recent GPS time at its disposal from among the ones previously stored. It then prepares to start a new radio step.
- For a device AP, it acquires and stores the GPS co-ordinates supplied by the device AP itself associating thereto the most recent GPS time at its disposal from among the ones previously stored. It then carries out transmission to the device AP of all the contents of its circular memory buffer as a witness of a number of encounters equal to the size of the buffer, then erasing them to be able to record new encounters. Then it resumes the radio step or else, if the time TRADIO has elapsed, it starts a GPS step.
- For a different device DP, designated by DPy, an anti-redundancy step is started, which consists in verifying whether said device DPy has already been served recently within a minimum predefined time of 120 s. In this case, the portable device DPy will not be served, and hence the corresponding encounter will not be recorded. Otherwise, it is ascertained whether the DPy-beacon is a confirm beacon, i.e., a confirm DPy-beacon, in response to the DP-beacon transmitted previously by said device DP. If the DPy-beacon is a confirm beacon, the link-up is completed with mutual exchange of the contents of the respective circular memory buffers. Otherwise, said device DP sends for confirmation its own confirm DP-beacon to the device DPy and then mutual exchange of the contents of the circular memory buffers is carried out.
In the transfer, the contents of the circular memory buffer of the device DPy are set in a temporary memory buffer of the aforesaid device DP, for filtering and sorting of the data. Next, the data thus processed are permanently stored in the circular memory buffer of this device DP. At the end of the procedure, control returns to the radio step, if TRADIO has not elapsed; otherwise a new GPS step is started.

## Claims

1. A search-and-rescue (SAR) system for the search and rescue of persons lost in a territory, comprising a dynamic witness network constituted by one or more portable devices (DP), one or more location units or points (LP), one or more search units or points (SP), and one or more access units or points (AP), and by a data-collection centre (CRD); said data-collection centre (CRD) being in communication with the access units (AP) and, via the access units (AP), with said portable devices (DP) of the dynamic witness network; said portable devices (DP) interacting with one another and storing in a dedicated memory the information received from the other portable devices (DP) of the witness network; wherein:
• the memory of each portable device (DP) has a pre-set depth; and
• each portable device (DP) of said dynamic witness network has means for exchanging biuniquely the information contained in the circular buffer of the memory whenever said device links up to another portable device (DP) of said dynamic witness network; so that each portable device (DP) of said dynamic witness network stores information of other portable devices (DP) of said dynamic witness network to which it has not directly linked up;
said system being **characterized in that** each portable device (DP) is constituted by:
• a section for acquisition at a pre-set time rate of the identifier (ID) of the portable device (DP), of the acquisition time, and of spatial co-ordinates from the GPS or from a unit (LP/AP) of the network;
• a section for storage in said circular-buffer memory of said data in time sequence with respect to the recorded data; and
• a section for output of the data already stored in said memory in reverse time sequence, wherein the memory of each portable device (DP) with a pre-set depth is of the circular-buffer type.

2. The system according to Claim 1, wherein each device of the witness network (AP, LP, SP, DP₁, DP₂, ... DPₙ) has a transmitting/receiving (TX/RX) section, dedicated to said biunique exchange of information between said devices of the witness network on a short-range channel at a pre-set frequency, preferably at the frequency of 868 MHz.

3. The system according to Claim 1 or Claim 2, wherein each portable device (DP) further comprises a sensor section equipped with accelerometer and magnetometer.

4. The system according to Claims 1 to 3, wherein each portable device (DP) further comprises a recent-antiredundancy temporal section, which, for minimum relink-up times, prevents new storage of the information associated to an identifier datum (ID) of each individual hiker.

5. The system according to Claim 4, wherein said antiredundancy temporal section is implemented by filter and classification functions.

6. The system according to Claims 1 to 4, wherein said location units (LP) store the GPS position co-ordinates and operate only in transmission at pre-set time intervals.

7. The system according to Claims 1 to 4, wherein said units of said dynamic witness network are equipped with a dedicated system that functions autonomously for autonomous management of the operating systems.

8. The system according to Claims 1 to 4, wherein said portable devices (DP) are equipped with means capable of transmitting said data stored in the circular-buffer memory at the maximum power available, and said search units (SP) comprise a radiofrequency emitter capable of activating, in said means of said portable devices (DP), transmission of data stored in the circular-buffer memory of said portable devices (DP).

9. The system according to Claim 8, wherein said search units (SP) comprise units capable of detecting the intensity of the radio signal emitted by the lost portable devices (DP), preferably for measuring the RSSI (Received-Signal-Strength Indicator), enabling evaluation of the relative distances.

10. The system according to Claims 1 to 9, wherein said access points (AP) comprise a unit for communication with the data-collection centre (CRD) and a unit for receiving data from said portable devices (DP) and from said search units (SP).

11. A search-and-rescue (SAR) method for search and rescue of persons lost in a territory, comprising a set of predefined rescue cells (AP) and mobile cells (SP) and a dynamic witness network constituted by the portable devices (DP), corresponding to the persons to be rescued, according to any one of Claims 1 to 10, as well as by a data-collection centre (CRD); the method comprising:
a. acquisition by each portable device (DP), at constant intervals, of its own geographical position via the GPS or via a data-emitting device constituted by a location unit (LP);
b. biunique and mutual storage, during link-up between two distinct portable devices (DPx) and (Pdy), of their new geographical positions, in the respective first locations of the circular-buffer memories with pre-set depth present in each portable device (DPx) and (Pdy);
c. direct acquisition, by one of the mobile rescue units (SP) or fixed rescue units (AP), of the most recent geographical positions of a portable device (DP) by means of direct link-up of said portable device (DP);
d. indirect acquisition using the witness method, by one of the mobile rescue units (SP) or fixed rescue units (AP), of the most recent geographical positions of a portable device (DPx), by means of direct link-up or link-up with a different portable device (DPy), which has previously stored the recent geographical positions of said portable device (DPx), said portable devices (DPx) and (DPy) being present in the dynamic witness network;
e. association to each information datum regarding a geographical position also of the respective information on the identifier datum (ID) and on the acquisition time;
f. shifting by one location of the information present in said circular-buffer memory and, after classification and filtering, rejection of the information present in said memory that is least significant for the purposes of search for lost persons;
g. forwarding to the data-collection centre (CRD) of the information received from the buffer memories of the portable devices (DP); and
h. reprocessing, by the data-collection centre (CRD), of the data of the dynamic witness network, gathered by the access units (AP) and search units (SP) and sent by them to the data-collection centre (CRD), with display on an interactive map of the geographical positions of the portable devices (DP) and temporal reconstruction of the path followed by said portable devices (DP) for estimation of the possible position of the lost person for search-and-rescue (SAR) purposes.

12. The SAR method according to Claim 11, wherein forwarding of the information is carried out via the access units (AP) or else via the search units (SP).

13. The SAR method according to Claim 11 or Claim 12, wherein the position estimated by the data-collection centre (CRD) is made available, with other communication means (Web, mobile network, etc.), to said search units (SP), which are activated with search function in the rescue cell at the estimated position and, following the steps of Claim 12, re-determine the position of the portable device (DP) of the lost person.

14. The SAR method according to Claim 13, wherein the relative distance between the search unit (SP) and the portable device (DP) associated to the lost person is estimated by quantitative evaluation of the intensity of the signal (RSSI) transmitted by the portable device (DP) itself and detected by said search unit (SP).

15. The SAR method according to Claim 14, wherein:
• said search unit (SP), in rescue configuration, transmits a search signal of a beacon type that automatically activates in the portable device (DP) a transmission with boosted radiofrequency signal; and
• the communication range of the rescue cell is increased.
